# EUROPEAN PATENT APPLICATION

(11) **EP 1 517 548 A1**
(43) Date of publication of application: **23.03.2005**
(21) Application number: 04104490.0
(22) Date of filing: 16.09.2004
(51) Int. Cl.: H04N 5/445

(54) **Television system apparatus with user avatar**

(30) Priority: 17.09.2003 KR 2003064592
(71) Applicant: Samsung Electronics Co., Ltd., Suwon-si, Gyeonggi-Do 442-742 (KR)
(72) Inventor: Kim, Beom-eun, Yangcheon-gu Seoul (KR)
(74) Representative: Read, Matthew Charles

(57) **Abstract**

Provided are a method and apparatus for providing a digital television viewer with a user-friendly user interface using avatars. The method of providing a user interface using an avatar generates an avatar and a menu screen based on user information collected by a predetermined unit, displays the generated avatar and menu screen, and renews the avatar and the menu screen based on the viewing patterns of a user. The apparatus has an information collection unit for collecting user information such as information input by a user or viewing pattern of the user, an avatar generation and renewal unit for generating and renewing an avatar based on the user information collected by the information collection unit, a menu screen composition unit generating and renewing a menu screen based on the user information collected by the information collection unit, and a data processing unit for transferring the generated or renewed avatar and menu screen to a display. A user receives a user interface including avatars that is for use with a digital television.

## Description

The present invention relates to television system apparatus, such as a digital television set, a personal video recorder, a set top box, etc., comprising processing means configured for generating a user interface signal for defining a user interface image to be displayed by a display device.

With recent advances in digital television technology, the digital television market is now proliferating. As digital television and household digital apparatuses become widespread and more commonly used, household appliances perform not only particular intrinsic functions, but also a variety of functions as a home networking system, and are evolving to an entertainment system providing information to users. Meanwhile, digital television broadcasting offers a large number of channels and hundreds of program options. Thus, there is a need for household appliances such as digital televisions and personal video recorders (PVR) that cater to the preferences of users and provide information based on user preferences in addition to the particular function of providing images. In other words, as the digital age develops, a convenient user interface that is easy for the users to understand and use is increasingly required.

A television system apparatus, according to the present invention, is characterised in that the processing means is configured for generating an avatar in dependence on user-related information and generating said user interface signal such that it defines an image of said avatar.

In the context of the present application, an avatar is a representation of a real or imaginary person or animal, associated with a user, an image of which can be displayed.

The apparatus may include user input means with the processing means being configured to modify the avatar in dependence on inputs made using the user input means. The user input means may be used to input of user-related information, e.g. gender, age, preferences, directly. However, the operation of the apparatus, e.g. the channels or programmes tuned to, in response to operation of the user input means, may be monitored and used to update the user-related information and the avatar.

Preferably, the avatar is configured by selecting templates in dependence on user-related information. A network communication means may be included and used by the processing means for obtaining avatar templates from a remote source thereof.

Preferably, the avatar is configured by selecting templates for different aspects of the avatar independently in dependence on different aspects of the user-related information.

Preferably, the processing means is configured for generating a menu screen in dependence on said user-related information and generating said user interface signal such that it defines an image of said menu screen.

An embodiment of the present invention will now be described, by way of example, with reference to the accompanying drawings, in which:
Figure 1 is a block diagram illustrating an apparatus for providing a user interface according to the present invention;
Figure 2 is a flowchart illustrating a method of providing a user interface according to the present invention;
Figure 3 is a flowchart illustrating the process of generating avatars of Figure 2;
Figure 4 is a flowchart illustrating the process of renewing information of avatars and a menu screen of Figure 2;
Figure 5 is a flowchart illustrating the process of renewing an avatar template according to the present invention;
Figure 6 is a menu screen used to select an avatar from the avatars provided in the process of generating avatars according to the present invention; and
Figure 7 illustrates a menu screen and an avatar updated on the basis of user information according to the present invention.

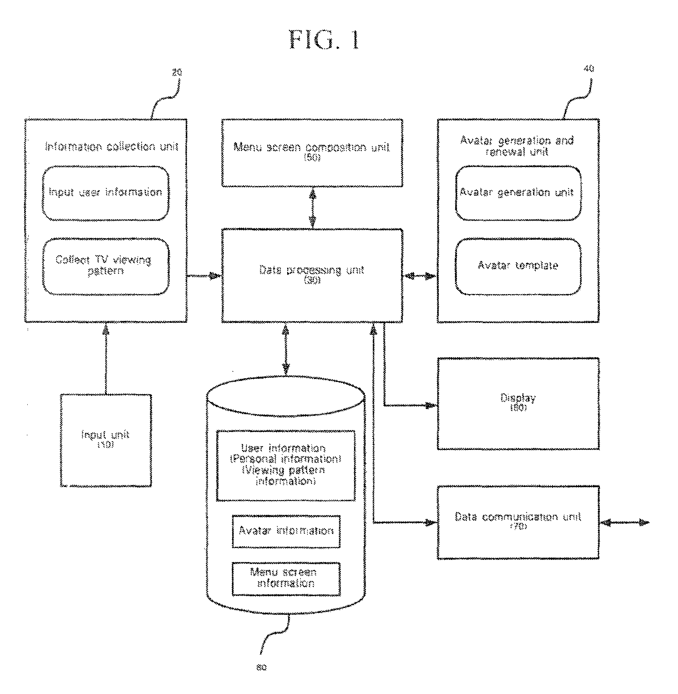

Referring to Figure 1, an apparatus for providing a user interface comprises an information collection unit 20, an avatar generation and renewal unit 40, a menu screen composition unit 50 used to compose a menu screen, a storing unit 80, and a data processing unit 30. The information collection unit 20 collects user information, which is input via an input unit 10. The avatar generation and renewal unit 40 generates and renews avatars based on the collected user information. The storing unit 80 stores the collected user information, the generated and updated avatars and menu screen information. The data processing unit 30 exchanges and processes information data with and for the information collection unit 20, the avatar generation and renewal unit 40, the menu screen composition unit 50 and the storing unit 80. In addition, the apparatus for providing the user interface further comprises a data communication unit 70 for downloading avatar templates from external sources for use in the generation and update of avatars.

A user may input user information and change or search for channels through the input unit 10. Examples of the input unit 10 include, but are not limited to, a remote controllers, keyboards and touch screens. The information collected by the information collection unit 20 comprises user information, input by the user, and user information, such as the digital television viewing patterns of the user. The viewing pattern may be the channels, the programmes or the genres of programmes frequently selected by the user, or the duration, the time or the day of viewing of a programme. The user information input by the user may comprise the gender, age, favourite entertainers and the interests of the user. The information collection unit 20 provides at least one field for receiving the user information and the user inputs information into each field.

The user information collected by the information collection unit 20 is transferred to the data processing unit 30. The data processing unit 30 transfers the collected user information to the menu screen composition unit 50 for use in its composition of a menu screen based on the user information and to the avatar generation and renewal unit 40 for use in the generation and renewal of the avatars on the basis of the user information. The generated and updated avatars, the menu screen information and the collected user information are stored in the storing unit 80. The display 60 is operable to display menus, avatars and programmes among other information.

The avatar generation and renewal unit 40 includes an avatar generation unit and an avatar template unit, which is used to generate the avatars. The avatar templates include a figure template having different contours based on gender and age, a face template representing hair styles and eye, nose, and mouth shapes and a coordinate template representing clothes and accessories. The avatar generation unit uses the avatar templates to generate and update the avatars based on the user information. For example, one avatar, taking the form of a woman in her twenties, is generated for a twenty-year-old woman, or a plurality of avatars are generated and the woman selects one. New avatar templates may be downloaded from external sources through the data communication unit 70.

The menu screen composition unit 50 composes a menu screen based on the user information. A basic menu screen is provided for a user who is generating a new avatar, and the menu screen is updated according to the viewing pattern of the user.

The avatars, generated or updated by the avatar generation and renewal unit 40, the menu screen information, generated or updated in the menu screen composition unit 50, and the user information, collected by the information collection unit 20, are stored in the storing unit 80. The user information includes the personal information and the viewing pattern information of the user. On the other hand, when a digital television is used by a plurality of users, characteristic user information for each user is stored and avatars and menu screens, corresponding to the user information for the different users, are constructed accordingly.

Renewal of the avatar and the menu screen may be performed whenever the user information is changed; however, it is preferred that the avatar and the menu screen are changed when predetermined fields of the user information exceed critical values. For example, when the viewing ratio of the sports genre is over 40% in a given week, the clothes or hair style of the avatar is preferably updated to a sporty look.

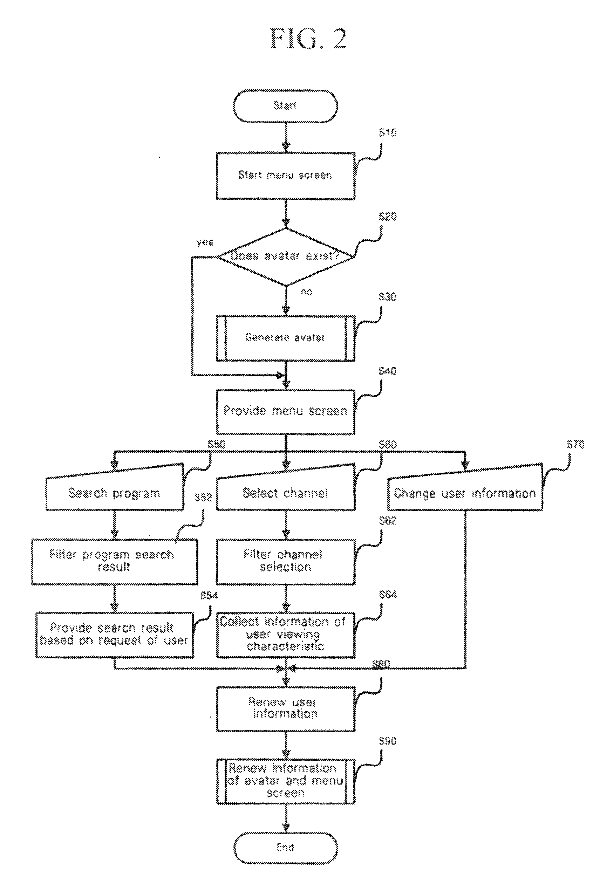

Referring to Figure 2, in a method of providing the user interface, a menu screen is started in step S10. The menu screen may be started by turning on a digital television or by selecting the menu screen through an input unit, such as a remote controller.

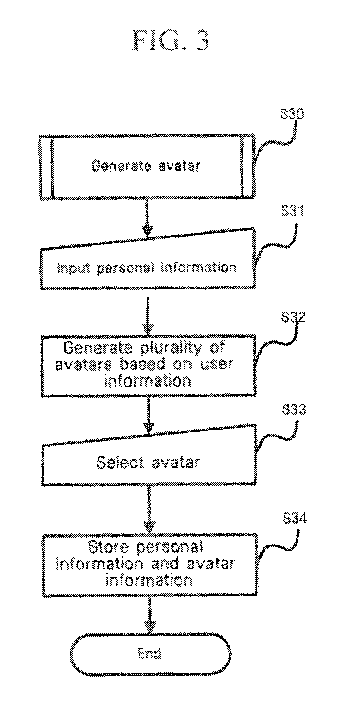

If it is determined in step S20 that there is no user avatar after the menu screen is started, an avatar is generated in step S30. The process of generating an avatar is described below with reference to Figure 3.

When the avatar for the user is generated, a menu screen with the avatar is provided to the user in step S40.

The user may select channels and search for programmes using the menu screen. The user may search for programmes based on his or her taste. The scope of the present invention is not limited to a search based on the titles of the programmes and the user may search for programmes by the names of actors or actresses or by genre.

In the process of searching for programmes, the user inputs a search word to search the programmes in step S50. The search result may be filtered, that is, provided to the users under certain restrictions in step S52. For example, adult programmes, included in the search result, may not provided to users under a certain age. Accordingly, the search result is provided after the filtering process in step S54. For example, when the user searches the programmes for the name of a popular entertainer, such as Hee-Seon Kim, the programmes in which she appears are provided as the search result. However, the search result is filtered and consequently adult programmes, included in the search result, are not provided to underage users.

In the process of searching channels, the user selects a desired channel in step S60. A filtering process is also included in the channel search process in step S62. In other words, underage users cannot select adult channels. When the user views the programmes provided after the filtering process in step S62, information of the viewing pattern of the user, for example, the viewing time, the viewing day, and the genres of the programs, is collected in step S64. According to the present invention, in step S62, some channels may not be selectable according to user's age or other conditions.

The filtering processes in steps S52 and S62 in the searching and the selection of programmes may be performed based on the age of the user. However, the filtering process may be performed on the basis of the right of the user to view a channel or programme. For example, when the channels include subscription and pay-per-view channels, only a user whose user information includes payment information, related to or viewing rights of the charged for channels, can select or search the charged for channels.

The user may change his or her user information whenever he or she purchases viewing rights or changes interests, in step S70.

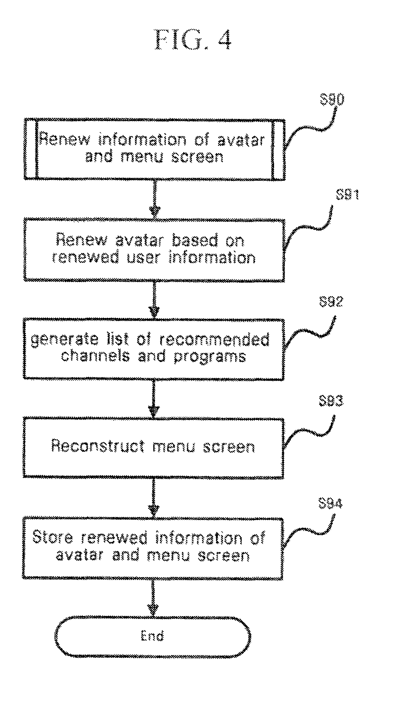

The user information is updated on the basis of the user information, collected by the programme search, the channel selection and user input changes of user information, in step S80. Then, the avatar and the menu screen information are updated in step S90. The process of updating the avatar and the menu screen information is described below with reference to Figure 4.

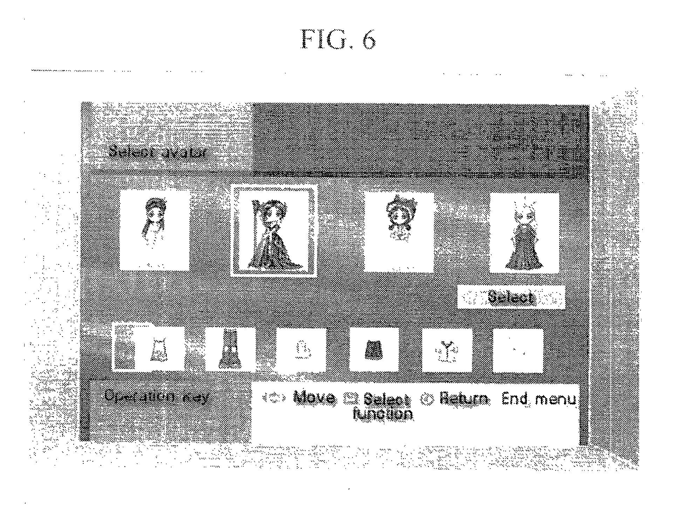

Referring to Figure 3, in order to generate an avatar, a user inputs personal information in step S31. Based on the input personal information, one or more avatars are generated by combining avatar templates, in step S32. When a plurality of avatars are generated, as shown in Figure 6, the user selects one avatar in step S33. When the user selects an avatar, the personal information and the selected avatar information are stored in step S34.

Referring to Figure 4, an avatar is updated on the basis of updated user information in step S91. For example, when 40% of the programmes the user views in one week are in the sports genre, the clothes of the avatar may be changed to provide a "sporty" look, or the clothes of the avatar may be changed according to the season.

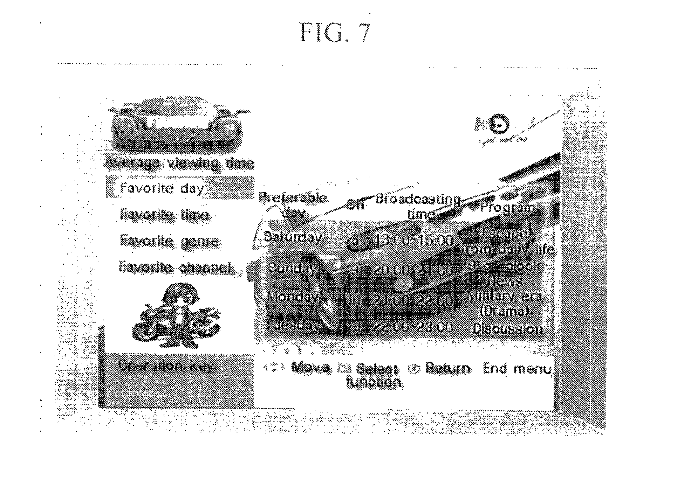

After the avatar is updated, a list of recommended channels and programmes is generated in step S92. The list of the recommended channels and programmes may be generated on the basis of the programmes, channels or programme genres most frequently viewed in the previous week. However, when an algorithm recommending programmes to the user is used, the recommendation list may be generated on the basis of the viewing pattern of the user. Then, the menu screen is reconstructed in step S93. That is, the menu screen may be constructed according to the viewing pattern of the user, for example, by generating a programme list including programmes that have been viewed for over 30 minutes, programmes frequently viewed on a daily basis, programmes having frequent viewing times, programmes in favourite programmes genres and programmes on favourite channels. The menu screen updated according to the user information and the avatar is shown in Figure 7. Then, the updated avatar and menu screen information are stored in step S94.

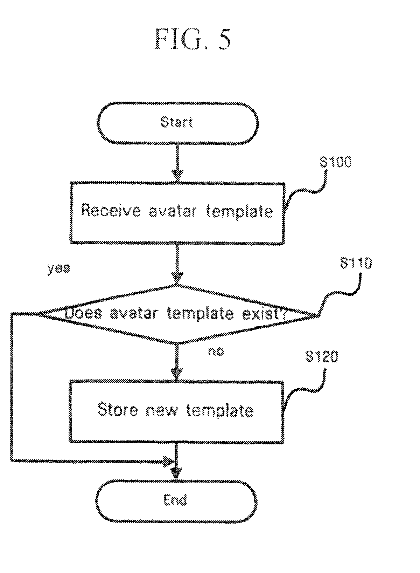

Referring to Figure 5, when an avatar is being updated, an avatar template is first received from an external server through the Internet via a wired or wireless connection, in step S100. It is determined whether the received avatar template currently exists in the storing unit 80 in step S110. If the received template does not exist there, the received avatar template is stored in step S120. Otherwise, the process is terminated.

According to the present invention, a viewer of digital television broadcasting may use an interface including an avatar. The user may watch the growth of the avatar and receive a menu screen based on the viewing patterns of the user. On the other hand, the avatar may be upgraded by downloading new avatar templates from the outside through the Internet.

In concluding the detailed description, those skilled in the art will appreciate that many variations and modifications can be made to the preferred embodiments without substantially departing from the principles of the present invention.

## Claims

1. A television system apparatus comprising processing means (30, 50) configured for generating a user interface signal for defining a user interface image to be displayed by a display device (60), **characterised in that** the processing means (30, 50) is configured for generating an avatar in dependence on user-related information and generating said user interface signal such that it defines an image of said avatar.

2. An apparatus according to claim 1, including user input means (20), wherein the processing means (30, 50) is configured to modify the avatar in dependence on inputs made using the user input means (20).

3. An apparatus according to claim 2, wherein the user input means (20) is configured for the inputting of user-related information.

4. An apparatus according to claim 2, wherein the processing means (30, 50) is configured to modify the avatar in dependence on viewing patterns resulting from use of the user input means (20).

5. An apparatus according to any preceding claim, wherein the avatar is configured by selecting templates in dependence on user-related information.

6. An apparatus according to claim 5, including network communication means (70), wherein the processing means (30, 50) is configured for obtaining avatar templates from a remote source thereof using the network communication means (70).

7. An apparatus according to claim 5 or 6, wherein the avatar is configured by selecting templates for different aspects of the avatar independently in dependence on different aspects of the user-related information.

8. An apparatus according to any preceding claim, wherein the processing means (30, 50) is configured for generating a menu screen in dependence on said user-related information and generating said user interface signal such that it defines an image of said menu screen.

9. A method of providing a user interface using an avatar, the method comprising:
generating an avatar and a menu screen based on user information collected by a predetermined unit;
displaying the generated avatar and menu screen; and
renewing the avatar and the menu screen based on the viewing patterns of a user.

10. The method of claim 9, wherein the user information in the generating of the avatar and the menu screen includes at least one of age, gender, and job, and the generated avatar and menu screen are selected from more than one avatar and menu screen that are displayed based on the user information.

11. The method of claim 9, wherein the renewing step comprises storing viewing pattern information, comprising at least one of the genres of programs selected by the user, times that the selected programs are viewed, days on which the selected programs are viewed, duration for which the selected programs are viewed, titles of the selected programs, and viewing channels, and renewing the menu screen based on the stored information in the renewing of the avatar and the menu screen.

12. The method of claim 9, wherein the renewing of the avatar and the menu screen comprises storing viewing pattern information comprising at least one of the genres of programs selected by the user, times that the selected programs are viewed, days on which the selected programs are viewed, duration for which the selected programs are viewed, titles of the selected programs, and viewing channels, and renewing the avatar when the value of the stored information is over a critical value.

13. The method of claim 9, further comprising receiving an avatar template for generating and renewing the avatar from an external source through a data communication link.

14. The method of claim 9, further comprising restricting services, including selecting channels or searching programs, based on the collected user information.

15. An apparatus for providing a user interface using an avatar, the apparatus comprising:
an information collection unit for collecting user information including information input by a user or viewing pattern of the user;
an avatar generation and renewal unit for generating and renewing an avatar based on the user information collected by the information collection unit;
a menu screen composition unit for generating and renewing a menu screen based on the user information collected by the information collection unit; and
a data process unit for transferring the generated or renewed avatar and menu screen to a display.

16. The apparatus of claim 15, wherein the avatar generation and renewal unit comprises:
an avatar generation unit for generating and renewing the avatar based on the user information;
and an avatar template unit for storing the composition elements of the avatar that are used in generating and renewing the avatar.

17. The apparatus of claim 16, further comprising a data communication unit for receiving the composition elements of the avatar that are stored in the avatar template unit from external source.

18. The apparatus of claim 15, further comprising a storing unit for storing the collected user information and the information of the renewed avatar and menu screen.

19. The apparatus of claim 15, further comprising a storing unit for storing user information of each of a plurality of users and avatars and menu screens based on the user information of the users.
